# FASCICULE DE BREVET EUROPEEN

(11) **EP 2 925 975 B1**
(45) Date de publication et mention de la délivrance du brevet: **25.05.2022**
(21) Numéro de dépôt: 13808148.4
(22) Date de dépôt: 03.12.2013
(51) Int. Cl.: F01D 25/28, F16N 7/40, G01M 15/04, G01N 33/28

(54) **SYSTEME DE MESURE D'UN VOLUME DE RETENTION D'HUILE DANS UN CIRCUIT DE LUBRIFICATION**
SYSTEM ZUR MESSUNG EINER ÖLRETENTIONSMENGE IN EINEM SCHMIERKREISLAUF
SYSTEM FOR MEASURING AN OIL-RETENTION VOLUME IN A LUBRICATION CIRCUIT

(30) Priorité: 03.12.2012 FR 1261570
(43) Date de publication de la demande: 07.10.2015
(73) Titulaire: Safran Aircraft Engines, 75015 Paris (FR)
(72) Inventeur: PIERROT, Jean, Marie, F-77550 Moissy Cramayel (FR); MORREALE, Serge, René, F-77550 Moissy Cramayel (FR)
(74) Mandataire: Cabinet Camus Lebkiri
(86) Numéro de dépôt international: PCT/FR2013/052921
(87) Numéro de publication internationale: WO 2014/087090

(56) Documents cités:
- EP-A1- 1 230 509
- WO-A1-91/18280
- WO-A1-99/36772
- JP-A- 2003 020 924
- US-A- 4 013 953
- US-A- 5 922 969
- Kral: "Ship Upgrade with KRAL Pumps and Flowmeters for the Marine", internet , septembre 2011 (2011-09), pages 29-34, XP002710464, Extrait de l'Internet: URL:http://www.kral.at/uploads/media/KRAL_ Ship_Upgrade_01.pdf [extrait le 2013-08-07]
- None

## Description

### DOMAINE

La présente invention se rapporte au domaine technique des circuits de lubrifications d'organes mécaniques pour des moteurs. Plus spécifiquement, le domaine de l'invention concerne les circuits d'huile d'une turbomachine et le calcul de volumes de rétention d'huile de différents organes répartis dans le circuit de lubrification.

Le domaine de l'invention se rapporte donc à tous les systèmes mécaniques lubrifiés pour lesquels on souhaite mesurer et/ou calculer les volumes de rétention d'huile, notamment pour calibrer et adapter les débits d'huile entrant et sortant et pour optimiser la conception des pièces mécaniques dans l'objectif de réduire leur masse en fonctionnement.

### ETAT DE L'ART

On trouve des circuits de lubrification d'huile dans de nombreux systèmes nécessitant généralement des mouvements de rotation de pièces mécaniques liées les unes aux autres par des liaisons permettant de transférer un effort d'une pièce à l'autre. Un objectif lors de la conception des pièces mécaniques est d'assurer un bon transit de l'huile dans le circuit de manière à éviter une rétention d'huile trop importante. Cette dernière conduit à augmenter la masse et la taille des équipements (réservoir d'huile en particulier).

C'est notamment le cas pour de nombreux types de moteurs et plus particulièrement des moteurs d'aéronefs soumis à des conditions de vol imposant des exigences élevées dans la conception des pièces utilisées.

Dans une turbomachine, le circuit d'huile permet de lubrifier et de refroidir différents organes mécaniques tels que les enceintes, qui contiennent les roulements, qui supportent les arbres en rotation, notamment entre la partie stator et la partie rotor, ou entre deux parties rotor d'un turboréacteur, ou les boîtiers d'accessoires. Parmi ces derniers, on trouve notamment l'AGB, dont l'acronyme signifie dans la terminologie anglo-saxonne « Accessory Gear box » qui comprend, entre autre, les pompes à carburant et les pompes à huile. On trouve également la TGB dont l'acronyme signifie dans la terminologie anglo-saxonne « Transfert Gear box » qui est un boîtier de transmission entre l'arbre radial du moteur et l'AGB.

Une particularité dans le domaine aéronautique est que la conception des organes et des systèmes est réalisée de telle sorte que leur masse embarquée soit minimale. En effet, cette dernière est consommatrice de carburant et représente un coût supplémentaire lors de l'exploitation du moteur.

Une problématique d'un circuit de lubrification est qu'il comprend des organes dont la géométrie ou la conception ne permet pas la circulation de 100% de l'huile injectée. C'est-à-dire qu'une certaine proportion d'huile, dite de rétention, est retenue dans chacun des organes du circuit de lubrification. La quantité d'huile retenue dépend de la nature de l'organe quelle traverse, telle que par exemple sa géométrie ou ses matériaux. La rétention d'huile peut avoir différentes causes selon le mode de fonctionnement du moteur.

D'une manière concrète, l'huile stockée dans un réservoir est envoyée dans les différentes branches du circuit d'alimentation du circuit de lubrification à l'aide d'une pompe d'alimentation. Notamment, elle alimente les enceintes, les boîtiers AGB et TGB, et elle est récupérée par des pompes de récupération à la sortie de chaque branche du circuit de récupération.

Lors de la mise en route de la turbomachine, une partie de l'huile est retenue dans le circuit de lubrification. Cela se traduit par une baisse quasiment instantanée du niveau d'huile dans le réservoir au démarrage : c'est ce qu'on appelle le « gulping ».

Au démarrage, l'huile est retenue dans les organes pour plusieurs raisons :
- Les canalisations se remplissent d'huile. En effet, à l'arrêt les canalisations sont remplies d'air et en fonctionnement elles sont remplies d'huile. Le volume huile est facilement mesurable car on connaît les dimensions des canalisations.
- Une partie de l'huile est vaporisée sous les conditions de fonctionnement du moteur. En effet, ce phénomène est connu sous le nom de brouillard d'huile et survient dans les enceintes où une partie de l'huile est vaporisée en fonctionnement et ne retourne pas au réservoir.
- L'adhérence aux parois. Dans ce cas, une quantité d'huile adhérant aux parois ne retourne pas au réservoir, notamment à cause de sa viscosité.
- La géométrie des embouchures. Les rétentions dans les cavités, notamment aux embouchures, sous effets d'attitude peuvent causer de la rétention.

Il est possible de prendre en compte le volume total retenu dans le circuit de lubrification en comparant le volume de sortie avec le volume d'entrée. La baisse du niveau d'huile permet de mesurer le volume de rétention global de l'ensemble des organes dont principalement les enceintes et les boîtiers, mais il ne permet pas de connaître le volume de rétention propre à chaque organe.

Il est donc impossible de tirer un enseignement d'un organe en particulier concernant le volume de rétention d'huile dans ce dernier puisqu'aucun moyen de mesure ne permet d'obtenir la quantité précise d'huile retenue.

Un des problèmes est que chaque organe par sa géométrie, ses conditions de fonctionnement et sa conception est traversé par un fluide qui est un mélange d'air et d'huile dont on souhaite connaitre la quantité retenue uniquement en huile.

Une difficulté est que le mélange se retrouve sous différente forme (gazeux, liquide ou les deux) selon les organes traversés. Par ailleurs, les proportions d'huile et d'air dans le fluide peuvent être différentes d'un organe à l'autre.

Enfin, chaque organe ayant un comportement différent selon les conditions de fonctionnement peut rendre l'opération de mesure difficile.

Un autre problème est que le circuit comprend généralement une pompe qui aspire une partie de l'huile du circuit de lubrification pour favoriser son écoulement et que de ce fait l'huile aspirée comprend une partie d'air supplémentaire résultant de la force d'aspiration surdimensionnée de l'huile dans le circuit.

Lors de la conception des pièces mécaniques, dits organes, du circuit de lubrification d'un moteur, il est important de tester, au moyen d'un banc de test, l'écoulement de l'huile dans le circuit pour en déduire le volume retenu. Cette opération permet de collecter des données sur la nature des organes et les opérations à mener pour améliorer leur conception, notamment réduire la masse de l'ensemble formé de l'organe et de l'huile retenue en fonctionnement. Or aucune solution de l'art antérieur ne semble permettre une telle prise en compte de conception au niveau de l'organe testé.

Des dispositifs de mesure de la qualité et/ou de la quantité d'huile dans des circuits de lubrification d'organes mécaniques pour moteur sont connus de JP 2003 020924 A, EP 1 230 509 A1, US 5 922 969 A et de l'article "Ship Upgrade with KRAL Pumps and Flowmeters for the Marine" de KRAL Solutions for Cylinder Lubricating Oil Measurement, publié en septembre 2011.

### RESUME DE L'INVENTION

L'invention permet de résoudre les inconvénients précités.

Un objet de l'invention concerne un dispositif de mesure optique conforme à la revendication 1.

La correction de la mesure du débit de débitmètre, effectuée par le dispositif de mesure, peut être une opération effectuée par l'application d'un facteur correctif sur la mesure d'un débit d'huile en sortie du débitmètre.

Un autre objet de l'invention concerne un débitmètre destiné à être disposé en sortie d'un premier organe d'un circuit de lubrification d'un moteur, selon la revendication 2.

Un autre objet de l'invention concerne un système de mesure d'un volume de rétention en huile d'au moins un premier organe d'un circuit de lubrification d'un moteur, selon la revendication 3.

Le but de l'invention est de proposer un système de mesure d'un volume de rétention en huile d'un circuit de lubrification comportant au moins un organe, le système permettant de connaître le volume de rétention de chaque organe dudit circuit. Cette donnée permet de valider par la suite les spécifications émises en phase de conception lors des essais de développement pour optimiser la masse des turboréacteurs.

Un des avantages de l'invention est de disposer d'un capteur permettant de mesurer directement une quantité d'huile, en masse par exemple, dans le fluide pour un volume donné en sortie d'un organe.

Selon l'invention, le premier fluide est un mélange d'air et d'huile. L'invention permet de traiter différents mélanges, en tenant compte du domaine de l'invention dans lequel l'huile et l'air sont mélangés selon différents états dans le moteur.

Dans un mode de réalisation, le second débitmètre est une pompe de récupération dimensionnée pour éviter le gavage d'un organe du circuit de lubrification par la détermination d'une proportion maximale d'air admissible dans le premier fluide. Il pourrait également s'agir d'un simple débitmètre en sortie d'un organe. Dans ce mode de réalisation, le débitmètre permet de réaliser différentes fonctions tels qu'une mesure de débit mais également de pomper le fluide traversant l'organe. Selon un mode de réalisation, les propriétés de pompage peuvent être configurées selon le fluide, son volume, la vitesse d'écoulement souhaitée ou encore la nature de l'organe.

Selon l'invention, le dispositif est un dispositif optique comprenant un émetteur de faisceau lumineux traversant le premier fluide transitant dans l'organe et un capteur photosensible permettant de mesurer la quantité de lumière reçue.

Cette solution peut être mise en œuvre facilement. En outre, elle permet de s'affranchir des vibrations du système ou des contraintes électromagnétiques qui peuvent être parfois générées lorsqu'un débitmètre de Coriolis ou respectivement un débitmètre électromagnétique est utilisé. En outre, un capteur optique permet d'obtenir une bonne précision et peut s'adapter à de nombreuses configurations. Notamment, grâce aux données d'étalonnage qui sont comparées aux données collectées par le capteur, le système de l'invention permet de prendre en compte plusieurs configurations possibles.

De manière à être compatible avec le dispositif de mesure optique, le système comprend une canalisation comportant au moins une portion translucide pour acheminer le premier fluide au travers du dispositif optique. Cette propriété à l'avantage d'être simplement mis en œuvre par l'intermédiaire d'une pièce standard facilement adaptable aux canalisations connues. L'émetteur et le capteur optique pouvant être disposés simplement de part et d'autre de la canalisation.

Avantageusement, la portion de la canalisation translucide comporte une section de forme oblongue ce qui permet de disposer d'une surface homogène de part et d'autre de la canalisation translucide. Ces surfaces homogènes permet d'obtenir des valeurs capturées sur une surface suffisante du capteur et représentative des données relatives à la proportion d'huile dans le fluide.

Selon l'invention, une mémoire permet de stocker, pour différents débits de sortie du premier organe, des valeurs d'étalonnage permettant d'associer des valeurs de références d'une réponse du capteur photosensible avec un ensemble de mélanges d'un premier fluide de référence, chaque mélange comprenant des proportions d'air différentes.

Un avantage est que l'étalonnage est facilement réalisable avec différents mélanges caractérisés d'huile dans le fluide. Les captures lumineuses réalisées lors de l'étalonnage permettent d'associer pour un débit donné, un rapport entre la quantité d'huile contenue dans le fluide avec un niveau lumineux ou un paramètre d'ondes lumineuses telles que la phase, la polarisation ou la longueur d'onde.

Avantageusement, le circuit de lubrification comprend une pluralité d'organes traversés par une pluralité de fluide ayant des proportions d'huile et d'air différentes à un instant donné. Le système comprend, dans ce cas, pour chaque organe traversé par un fluide provenant de l'injecteur un premier débitmètre, un second débitmètre et un dispositif optique tel que défini précédemment.

Dans chaque branche, les précédemment éléments sont agencés de telle sorte que les volumes de rétention de chaque organe soient calculés selon un système de mesure tel que défini précédemment. Le volume de rétention d'huile du circuit de lubrification est alors calculé en sommant chacun desdits volumes de rétention de chaque organe.

L'objet de l'invention concerne également un procédé de mesure d'un volume résidant d'huile dans un organe d'un circuit de lubrification d'un moteur, selon la revendication 11.

L'objet de l'invention concerne également un procédé de mesure d'un volume résidant d'huile dans un circuit de lubrification d'un moteur, ledit circuit comprenant une pluralité d'organes étant traversés chacun par un fluide injecté par un injecteur, ledit fluide comprenant un mélange d'huile et d'air, le volume résidant dans chaque organe étant calculé selon le procédé décrit précédemment. Le procédé comprend, en outre, un calcul du volume d'huile résidant dans le circuit de lubrification par la somme des volumes résidant d'huile dans chacun desdits organes.

### BREVES DESCRIPTION DES FIGURES

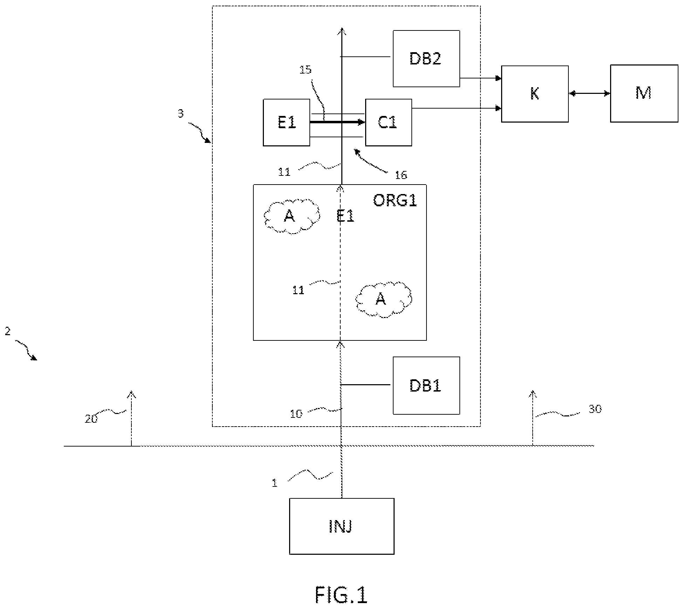

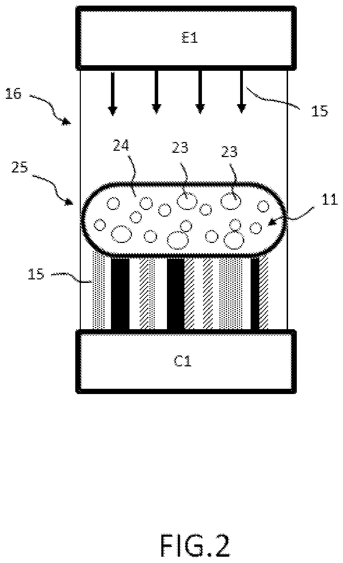

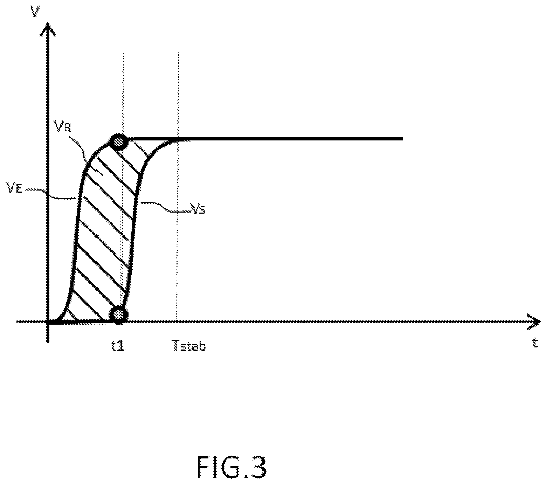

D'autres caractéristiques et avantages de l'invention ressortiront à la lecture de la description détaillée qui suit, en référence aux figures annexées, qui illustrent :
▪ figure 1 : un schéma de principe du système de mesure de l'invention sur une branche d'un circuit de régulation comportant un organe ;
▪ figure 2 : un dispositif de mesure optique intégré au système de mesure de volumes de rétention ;
▪ figure 3 : une courbe d'évolution des volumes entrant et sortant d'un organe d'un circuit de lubrification.

### DESCRIPTION

Dans la suite de la description, on considèrera que les notions de « débit d'huile » ou de « volume d'huile » peuvent être traitées indifféremment en considérant un volume d'huile pour une unité de temps donné.

Ainsi la mesure d'un volume ou d'un débit est équivalente dans la considération de la présente invention et ne constitue pas une restriction puisque l'une ou l'autre des considérations permet d'aboutir au résultat revendiqué.

La figure 1 représente une portion 3 d'un circuit de lubrification 2 dans lequel un débit d'huile 1 est injecté au moyen d'un injecteur INJ. Le circuit comprend différentes branches 10, 20, 30 dans lesquelles l'huile injectée 1 se répartie. Les branches 20 et 30 ne sont pas représentées ainsi que n'est pas représentée la sortie générale du circuit dans laquelle les différentes sorties des différentes branches aboutissent.

Chaque branche comprend au moins un organe, dans la branche 10 représentée sur la figure 1, un organe ORG1 est représenté. Il peut être une enceinte, un boitier d'accessoires ou encore un autre élément du moteur.

L'invention cherche à mesurer le volume d'huile retenu dans l'organe ORG1. La totalité de l'huile retenue dans le circuit de lubrification peut être obtenue en sommant chaque volume d'huile retenu dans chaque organe. En outre, le volume total d'huile retenu dans le circuit de lubrification peut être mesuré également par un autre moyen tels que ceux de l'art antérieur. Il est également possible de comparer les résultats obtenus par la méthode de l'invention avec ceux obtenus par une autre méthode en ce qui concerne le volume total pour permettre d'effectuer une corrélation des mesures. Cette approche permettrait de s'assurer des résultats ou de détecter une erreur de mesure. L'invention concerne également cette étape de comparaison dans un mode de réalisation amélioré.

Le système de mesure de l'invention est donc représenté sur la figure 1. Il comprend un premier débitmètre DB1 qui permet de mesurer un volume d'huile 10 entrant dans l'organe ORG1 sur une unité de temps donnée. Au niveau du débitmètre DB1, l'huile injectée n'est pas mélangée avec de l'air ou si elle l'est c'est en de trop petites quantités de sorte que le volume d'air à ce niveau du circuit est négligeable.

L'huile 10 pénètre dans l'organe ORG1 dans laquelle elle est utilisée pour la lubrification de ce dernier. Dans cette étape, l'huile est mélangée avec un volume d'air, noté A. L'huile peut se retrouver selon les organes qu'elle traverse sous différents états. Comme l'air est aspiré par un récupérateur d'huile, l'aspiration peut également contribuer au mélange de l'huile avec l'air. Dans l'organe ORG1, on nomme le fluide représentant le mélange huile-air : le fluide 11.

Il existe deux modes distincts dans lesquels le système de l'invention peut être utilisé.

Un premier mode correspond à la phase transitoire du démarrage du moteur. Pendant cette phase transitoire de démarrage, les débits entrant et sortant de l'organe ORG1 ne seront pas égaux car il y a plus d'huile 10 qui entre dans l'organe ORG1 que d'huile qui en sort. La différence correspondant au volume retenu dans l'organe ORG1. Le système de mesure de l'invention permet justement de mesurer ce volume de rétention.

Le second mode correspond à un mode de fonctionnement stabilisé, le débit d'huile sortant est égal au débit d'huile entrant. Dans ce cas, pour des conditions de fonctionnement données, le volume de rétention dans l'organe ORG1 est constant.

La figure 3 illustre les deux courbes d'évolution du volume entrant V_{E} et du volume sortant V_{S} dans un organe ORG1 notamment au démarrage, c'est-à-dire avant la phase de stabilisation à partir de T_{stab}. On comprend que dans cette phase-là la différence entre le volume entrant V_{E} et le volume de sortant V_{S} correspond au volume de rétention de l'huile V_{R}.

Le système de mesure de l'invention permet donc dans un premier temps de mesurer le volume entrant dans l'organe et de connaitre le débit entrant D1.

La mesure du volume d'huile entrant 10 peut être réalisée à partir d'un débitmètre ou d'un compteur volumétrique. Ceci est possible car dans le circuit d'alimentation en entrée de l'organe ORG1, le fluide est « monophasique », c'est de l'huile pure ou presque, il n'y a pas encore de mélange air / huile ce qui biaiserait la mesure du débit d'huile pur.

En intégrant le débit volumique par rapport au temps, le système de mesure de l'invention permet de déduire le volume d'huile entrant.

Le système de mesure de l'invention comprend en outre au moins un débitmètre de sortie DB2 positionné en sortie de l'organe ORG1. Chaque branche du circuit de régulation peut être équipée d'un débitmètre de sortie. Le débitmètre de sortie DB2, selon un mode de réalisation, peut être une pompe de récupération. Les caractéristiques de chaque pompe permettent de connaître le débit de fluide traité par la pompe et donc le débit sortant de chaque organe. En outre, une pompe de récupération permet de faciliter la récupération de l'huile transitant dans l'organe ORG1 tout en mesurant le débit de sortie D2 de cette branche.

Cependant le fluide qui circule dans les canalisations de récupération n'est pas de l'huile pure ou « presque », c'est-à-dire dans des proportions proches, mais un mélange air / huile comprenant une proportion d'air non négligeable.

Le fluide 11 comprend un volume d'air non négligeable d'une part parce que le fluide qui traverse l'organe se présente en sortie sous forme d'un mélange air / huile et d'autre part que les pompes de récupération sont dimensionnées pour éviter le gavage des organes et plus particulièrement des enceintes. Généralement, dans les circuits de lubrification d'une turbomachine, les capacités de récupération de telles pompes assurent un rapport débit d'air / débit d'huile de l'ordre de 1,5.

Le système de mesure de l'invention comprend donc un dispositif de mesure permettant de calculer une valeur représentant une quantité d'huile donnée dans un volume donné du fluide en sortie de l'organe ORG1. La valeur pouvant représenter un indicateur de masse ou de volume de la proportion d'huile dans le fluide dans un volume déterminé de fluide.

Un dispositif de mesure optique peut être mis en œuvre dans le système de mesure de l'invention. Dans ce cas, le dispositif de mesure optique comprend un émetteur E1 permettant de générer un faisceau lumineux 15 au travers d'une cavité 16 transparente dans laquelle le fluide transite, le faisceau traversant la cavité est ensuite capturé par un capteur C1.

La cavité 16 peut être une portion de canalisation translucide ou un réservoir de transition transparent. Elle est située en sortie de l'organe ORG1. Le fluide traversant la cavité 16 est ensuite acheminé vers une sortie pour rejoindre les autres fractions de fluide ou d'huile provenant d'autres organes.

La figure 2 détaille un mode de réalisation d'un dispositif de mesure optique 16 dans lequel une canalisation translucide 25 permet la circulation du fluide 11, ledit fluide comprenant de l'air 24 et de l'huile 23 représenté sous forme de gouttelettes.

Le faisceau 15 est généré par l'émetteur E1 de sorte qu'il traverse la canalisation translucide 25. La canalisation translucide 25 comporte une hauteur identique sur toute la portion traversée par le faisceau lumineux. La canalisation comporte une largeur permettant d'obtenir une surface d'analyse sur le capteur C1 suffisante pour extraire des données exploitables et un certain niveau de précision des mesures. L'analyse des signaux reçus peut être réalisée sur une portion suffisante d'un capteur C1 ayant reçu un faisceau lumineux.

Les signaux 15 en aval de la canalisation translucide 25, c'est-à-dire après leur passage dans la canalisation 25, sont représentés différemment sur la figure 2 qu'avant leur passage dans la canalisation, c'est-à-dire en amont.

Selon la configuration du dispositif optique 16 et le type de rayons lumineux choisis, les rayons reçus par le capteur C1 peuvent être étudiés selon différents paramètres tels que leur intensité lumineuse ou la puissance, leur phase ou leur polarisation ou encore la prise en compte des longueurs d'ondes modifiées.

On préfère dans le système de l'invention utiliser des matériaux n'altérant pas les signaux ou au minimum de sorte que seul la proportion d'huile dans le fluide soit le facteur déterminant de l'analyse des variations constatées des signaux lumineux sur le capteur C1.

De la même manière, la forme de la cavité, donc de la canalisation, doit être choisie de manière optimisée pour favoriser une exploitation des résultats représentatifs des proportions d'huile dans le fluide. Une surface d'analyse suffisante sur le capteur C1 permet de collecter un échantillon suffisant de valeurs reçues et permet d'éviter les erreurs liées aux fluctuations sporadiques de la proportion d'huile dans le fluide.

Notamment, une section oblongue de la canalisation peut être choisie. Elle offre deux surfaces parallèles en regard l'une de l'autre et permet d'avoir une surface de capture suffisante.

Le choix d'une canalisation comportant une surface plane de part et d'autre de la traversée du rayon lumineux est particulièrement avantageux. Comme le représente la figure 2, on remarque que les signaux lumineux traversent selon le même chemin optique la canalisation et sont reçus ensuite sur le capteur C1.

On comprend qu'une canalisation comportant une section oblongue par exemple, ou rectangulaire selon un autre exemple, permet de limiter les effets indésirables d'une canalisation circulaire, par exemple. Cette dernière induirait effectivement des écarts de chemin lumineux sur l'ensemble de la surface apparente d'un cylindre.

Après la génération d'un faisceau lumineux, le système de mesure de l'invention permet de mesurer la quantité de lumière qui a traversé la canalisation à l'aide d'un capteur photosensible C1.

La quantité de lumière reçue par le capteur dépend de la nature du fluide qui traverse la canalisation transparente, notamment dans l'application décrite, elle dépend de la proportion d'air et d'huile dans le fluide. Les quantités de lumière reçues peuvent être différentes selon si le fluide est de l'huile, un mélange d'air et d'huile ou simplement de l'air.

Pour calibrer le dispositif optique, il est possible d'étalonner les différentes réponses du capteur photosensible C1 à différentes configurations caractérisées de mélange et de débit de fluide.

Pour cela, le dispositif optique peut être associé à un calculateur K et une mémoire M. La mémoire M permet de stocker des courbes ou des tables d'étalonnage et le calculateur K permet d'effectuer les comparaisons entre les valeurs d'étalonnage stockées et des valeurs générées à partir des signaux reçus par le capteur C1.

Le second débitmètre DB2 permet de mesurer le débit du fluide donc du mélange.

L'analyse des signaux reçus et leur corrélation en temps réel, permet de connaître à chaque instant la proportion en huile dans le fluide sortant de chaque organe.

Comme on connaît le débit du fluide 11 grâce aux caractéristiques de chaque pompe de récupération, c'est à dire du second débitmètre DB2, un calculateur permet de calculer le débit et le volume d'huile sortant contenu dans le fluide 11. En outre, ce calculateur peut être le même que le calculateur K déjà décrit.

Deux paramètres peuvent être pris en compte conjointement pour affiner les mesures du capteur :
- le temps d'intégration du faisceau sur le capteur ;
- la vitesse d'écoulement du fluide.

Ainsi, lorsque le débitmètre DB2 mesure le débit et donc la vitesse d'écoulement du fluide 11, deux indicateurs peuvent être exploités :
- un premier indicateur peut être généré au calculateur K de manière à choisir une table d'étalonnage adapté au volume de fluide circulant dans la cavité translucide ;
- un second indicateur permet d'être pris en compte dans la fréquence du faisceau émis et du laps de temps d'émission.

Dans la phase transitoire de démarrage pendant laquelle il y a davantage d'huile qui entre dans l'organe ORG1 que d'huile qui en sort, l'évolution des volumes entrant V_{E} et sortant V_{S} peut être suivie en fonction du temps conformément à la représentation de la figure 3. Le graphique de la figure 3 permet de mettre en évidence le volume d'huile résidant V_{R} dans chaque organe par la mesure de l'aire entre les deux courbes.

La phase transitoire de démarrage est définie sur la figure 3 jusqu'à la stabilisation obtenue à T_{Stab}. A partir du moment où la stabilisation est obtenue, c'est-à-dire après T_{Stab}, le volume sortant V_{S} est identique au volume entrant V_{E}. C'est dire que le volume d'huile retenu dans l'organe ORG1 est stable.

A chaque instant t1 de la phase transitoire, c'est-à-dire à un moment avant l'atteinte de T_{Stab}, le volume de l'huile entrant est supérieur au volume de l'huile sortant de l'organe, on a : V_{E}(t1) > V_{S}(t1).

En intégrant par rapport au temps les fonctions V_{E} entrant et V_{S} entre t=0s et t= T_{Stab}, on obtient par différence le volume de rétention V_{R} de chaque organe. Ce volume correspond à l'aire de la zone hachurée sur la figure 3.

Le système de l'invention pourrait fonctionner selon des alternatives de réalisation notamment sur le choix du dispositif de mesure permettant de déterminer la quantité d'huile dans le fluide en sortie de l'organe ORG1.

Tout d'abord, un dispositif de mesure optique pourrait être choisi de sorte à générer des ondes dans des gammes autres que des gammes d'ondes lumineuses visibles.

Typiquement, les ondes de la gamme des ultraviolets ou infrarouges proches du visible semblent permettre d'obtenir de bons résultats également avec le choix d'un capteur approprié.

L'utilisation d'une source d'ondes amplifiées ou d'un laser pourrait être intégrée au système de mesure de l'invention.

Enfin, selon des modes de réalisation, le faisceau lumineux peut être sous forme d'ondes pulsées, c'est-à-dire que des séquences lumineuses sont émises pendant un laps de temps. Il est important que le laps de temps pendant lequel le faisceau est généré soit plus faible d'un facteur prédéterminé que la vitesse d'écoulement du fluide. Ceci permet d'obtenir une mesure homogène de la quantité de fluide sans que le mouvement du fluide n'altère les mesures.

De la même manière un spectre étalé ou mono fréquence peut être utilisé selon différentes configurations du dispositif de mesure optique.

D'autres dispositifs de mesure non optiques existent mais ne pourraient être utilisés qu'avec des difficultés d'intégration. Parmi ces derniers, une solution pour mesurer le débit (et donc le volume) d'huile sortant serait d'utiliser des débitmètres massiques tels qu'un débitmètre de Coriolis ou encore un débitmètre électromagnétique qui chacun permet de connaître la quantité d'huile dans le mélange air / huile.

En revanche, l'invention utilise un dispositif optique comme mode de réalisation car le dispositif optique n'est pas soumis aux restrictions d'un environnement non vibratoire car la turbomachine peut vibrer en fonctionnement.

Enfin le dispositif optique s'affranchit de la conductivité de l'huile qui pourrait être un inconvénient selon l'utilisation d'un débitmètre électromagnétique et des conditions de test. Cela évite également de devoir charger l'huile de particules conductrices, ce qui biaiserait sensiblement les résultats pour obtenir le volume d'huile de rétention.

## Revendications

1. Dispositif de mesure optique (E1, C1, 16) comprenant :
▪ une canalisation comportant au moins une portion translucide (25) pour acheminer un premier fluide (11) au travers du dispositif optique (E1, C1, 15, 25) ;
- un émetteur (E1) de faisceau lumineux (15) configuré pour émettre des faisceaux lumineux traversant le premier fluide (11) transitant dans la portion translucide (25) et un capteur photosensible (C1) configuré pour recevoir les faisceaux lumineux à travers la portion translucide et mesurer la quantité de lumière reçue (15) ;
▪ une mémoire (M) pour stocker, pour différents débits de sortie (D2) d'un premier organe (ORG1), des valeurs d'étalonnage permettant d'associer des valeurs de références d'une réponse du capteur photosensible (C1) avec un ensemble de mélanges de premier fluide (11) de référence, chaque mélange comprenant des proportions d'air (A) différentes.
▪ un calculateur pour calculer une première valeur (V1) à un instant donné représentant une quantité d'huile dans un volume d'un premier fluide (11), à partir des valeurs d'étalonnage, ledit premier fluide (11) étant un mélange d'un volume d'huile (10) et d'un premier volume d'air (A), ledit dispositif de mesure (E1, C1, 16) étant adapté à corriger, à partir de la première valeur (V1), la mesure d'un débit d'un débitmètre (DB2) mesurant un volume d'huile en sortie d'un organe d'un circuit de lubrification (1, 10, 20, 30) d'un moteur.

2. Débitmètre (DB2) destiné à être disposé en sortie d'un premier organe (ORG1) d'un circuit de lubrification (1, 10, 20, 30) d'un moteur, ledit débitmètre (DB2) permettant la mesure d'un débit (D2) d'un premier fluide (11) transitant dans ledit premier organe (ORG1), ledit premier fluide (11) étant un mélange d'un volume d'huile (10) et d'un premier volume d'air (A), **caractérisé en ce que** le débitmètre (DB2) comprend un dispositif de mesure optique (E1, C1, 16) selon la revendication 1, le calculateur (K) du dispositif de mesure optique permettant de déduire un débit d'huile (D3) en sortie du premier organe (ORG1) à partir du débit (D2) du premier fluide (11) mesuré et de la première valeur (V1) calculée par le dispositif de mesure (E1, C1, 16).

3. Système de mesure d'un volume de rétention (V_{R}) en huile d'au moins un premier organe (ORG1) d'un circuit de lubrification (1, 10, 20, 30) d'un moteur, l'huile injectée (10) transitant dans le premier organe (ORG1) mélangée à un premier volume d'air (A), le mélange formant un premier fluide (11), ledit système de mesure comprenant :
• un injecteur (INJ) d'huile à l'entrée du circuit de lubrification pour alimenter ledit circuit et ;
• un premier débitmètre (DB1) pour mesurer un débit (D1) d'huile en entrée du circuit de lubrification et ;
• un second débitmètre (DB2) disposé en sortie du premier organe (ORG1), ledit second débitmètre (DB2) étant arrangé pour mesurer un débit (D2) du premier fluide (11) en sortie du premier organe (ORG1) à un instant donné ;
• un dispositif de mesure optique (E1, C1, 16) selon la revendication 1 pour calculer une première valeur (V1) à un instant donné représentant une quantité d'huile dans un volume du premier fluide (11) donné transitant dans ledit premier organe (ORG1) ;
• un calculateur (K) arrangé pour déduire :
o un débit d'huile (D3) en sortie du premier organe (ORG1) à partir du débit (D2) du premier fluide (11) mesuré et de la première valeur (V1) calculée ;
o le volume de rétention (V_{R}) d'huile instantané dans le premier organe (ORG1) à partir de la comparaison du débit d'huile (D1) en entrée du circuit de lubrification et du débit d'huile calculé (D3) en sortie du premier organe (ORG1).

4. Système de mesure d'un volume de rétention en huile selon la revendication 3, **caractérisé en ce que** le premier fluide est un mélange d'air (A) et d'huile (10).

5. Système de mesure d'un volume de rétention en huile selon l'une quelconque des revendications 3 à 4, **caractérisé en ce que** le second débitmètre (DB2) est une pompe de récupération dimensionnée pour éviter le gavage d'un organe du circuit de lubrification et comportant un rapport débit d'air / débit d'huile de l'ordre de 1,5.

6. Système de mesure d'un volume de rétention en huile selon l'une quelconque des revendications 3 à 5, **caractérisé en ce que** le dispositif de mesure est un dispositif optique (E1, C1, 15, 25) comprenant un émetteur (E1) de faisceau lumineux (15) traversant le premier fluide (11) transitant dans l'organe et un capteur photosensible (C1) pour mesurer la quantité de lumière reçue (15).

7. Système de mesure d'un volume de rétention en huile selon la revendication 6, **caractérisé en ce qu'**il comprend une canalisation comportant au moins une portion translucide (25) pour acheminer le premier fluide (11) au travers du dispositif optique (E1, C1, 15, 25).

8. Système de mesure d'un volume de rétention en huile selon la revendication 7, **caractérisé en ce que** la portion de la canalisation translucide (25) comporte une section de forme oblongue.

9. Système de mesure d'un volume de rétention en huile selon l'une quelconque des revendications 6 à 8, **caractérisé en ce qu'**il comporte une mémoire (M) pour stocker, pour différents débits de sortie (D2) du premier organe (ORG1), des valeurs d'étalonnage permettant d'associer des valeurs de références d'une réponse du capteur photosensible (C1) avec un ensemble de mélanges de premier fluide (11) de référence, chaque mélange comprenant des proportions d'air (A) différentes.

10. Système de mesure d'un volume de rétention en huile selon l'une quelconque des revendications 6 à 9, **caractérisé en ce que** le circuit de lubrification comprend une pluralité d'organes (ORGi) traversés par une pluralité de fluides (10, 20, 30) ayant des proportions d'huile et d'air différentes à un instant donné, ledit système comprenant pour chaque organe traversé par un fluide provenant de l'injecteur (INJ) un premier débitmètre (DB1), un second débitmètre (DB2) et un dispositif optique (E1, C1, 15, 25) défini à la revendication 6, de telle sorte que les volumes de rétention de chaque organe (ORGi) soient calculés selon un système de mesure de l'une quelconque des revendications 2 à 9 et que le volume de rétention d'huile du circuit de lubrification soit calculé en sommant chacun desdits volumes de rétention de chaque organe.

11. Procédé de mesure d'un volume de rétention (V_{R}) d'huile dans un organe (ORG1) d'un circuit de lubrification d'un moteur, ledit organe (ORG1) étant traversé par un fluide comprenant un mélange d'huile (10) injecté et d'air (A), ledit procédé comprenant :
• une injection d'un volume d'huile (10) en entrée du dit organe (ORG1) au moyen d'un injecteur (INJ) ;
• une mesure du débit entrant du volume d'huile (10) dans ledit organe (ORG1) au moyen d'un premier débitmètre (DB1);
• la génération d'un faisceau lumineux au moyen d'un émetteur (E1) au travers d'une portion translucide d'une canalisation disposée en sortie de l'organe (ORG1) et acheminant le fluide ;
• la réception du signal généré par l'émetteur (E1) sur un capteur (C1), ledit signal ayant traversé la canalisation acheminant le fluide (11) ;
• la comparaison du signal reçu avec une table de valeurs d'étalonnage prenant en compte différentes proportions d'huile dans un fluide de référence au moyen d'un calculateur (K), ledit fluide (11) comprenant un mélange d'air et d'huile, les valeurs étant stockées dans une mémoire (M) ;
• une mesure du débit du fluide (11) en sortie de l'organe (ORG1) au moyen d'un second débitmètre (DB2) ;
• un calcul de la quantité d'huile dans un volume donné de fluide sortant de l'organe (ORG1), à partir de la comparaison du signal reçu avec la table de valeurs d'étalonnage;
un calcul du volume de rétention (V_{R}) dans l'organe (ORG1),à partir du débit du fluide (11) mesuré, du débit d'huile et de la quantité d'huile dans un volume donné, calculée.

12. Procédé de mesure d'un volume de rétention d'huile dans un circuit de lubrification d'un moteur, ledit circuit comprenant une pluralité d'organes (ORGi) étant traversés chacun par un fluide injecté par un injecteur (INJ), ledit fluide comprenant un mélange d'huile et d'air, le volume de rétention dans chaque organe (ORGi) étant calculé selon le procédé de la revendication 11, **caractérisé en ce que** ledit procédé comprend un calcul du volume d'huile de rétention dans le circuit de lubrification par la somme des volumes de rétention d'huile dans chacun desdits organes.

## Patentansprüche

1. Optische Messvorrichtung (E1, C1 16), umfassend:
▪ eine Kanalisation, umfassend wenigstens einen lichtdurchlässigen Abschnitt (25) zum Befördern eines ersten Mediums (11) durch die optische Vorrichtung (E1, C1, 15, 25);
▪ einen Sender (E1) von Lichtbündeln (15), der zum Senden von Lichtbündeln konfiguriert ist, die das erste Medium (11) durchqueren und in den ersten lichtdurchlässigen Abschnitt (25) übergehen, und einen lichtempfindlichen Sensor (C1), der zum Empfangen der Lichtbündel durch den lichtdurchlässigen Abschnitt und zum Messen der empfangenen Lichtmenge (15) konfiguriert ist;
▪ einen Speicher (M) zum Speichern der Kalibrierungswerte für unterschiedliche Ausgangsdurchsätze (D2) und die das Zuordnen der Bezugswerte einer Antwort des lichtempfindlichen Sensors (C1) zu einer Gruppe von Mischungen des ersten Bezugsmediums (11) zulässt, wobei jede Mischung unterschiedliche Luftverhältnisse (A) umfasst,
▪ einen Rechner zum Berechnen eines ersten Wertes (V1) zu einem bestimmten Zeitpunkt, der eine Ölmenge in einem Volumen eines ersten Mediums (11), ausgehend von den Kalibrierungswerten darstellt, wobei das genannte erste Medium (11) eine Mischung aus einem Ölvolumen (10) und einem ersten Luftvolumen (A) ist, wobei die genannte Messvorrichtung (E1, C1, 16) geeignet ist, um ausgehend von dem ersten Wert (V1) die Messung eines Durchsatzes eines Durchflussmessers (DB2) zu korrigieren, der ein Ölvolumen am Ausgang eines Organs eines Schmierkreislaufs (1, 10, 20, 30) eines Motors misst.

2. Durchflussmesser (DB2), der dazu bestimmt ist, am Ausgang eines ersten Organs (ORG1) eines Schmierkreislaufs (1, 10, 20, 30) eines Motors angeordnet zu sein, wobei der genannte Durchflussmesser (DB2) die Messung eines Durchsatzes (D2) eines ersten Mediums (11) zulässt, das in das genannte erste Organ (ORG1) übergeht, wobei das genannte erste Medium (11) eine Mischung eines Ölvolumens (10) und eines ersten Luftvolumens (A) ist, **dadurch gekennzeichnet, dass** der Durchflussmesser (DB2) eine optische Messvorrichtung (E1, C1, 16) gemäß Anspruch 1 umfasst, wobei der Rechner (K) der optischen Messvorrichtung das Herleiten eines Öldurchsatzes (D3) am Ausgang des ersten Organs (ORG1) ausgehend von dem Durchsatz (D2) des ersten gemessenen Mediums (11) und des ersten Wertes (V1), der von der Messvorrichtung (E1, C1, 16) berechnet ist, zulässt.

3. Messsystem eines Öl-Rückhaltevolumens (V_{R}) wenigstens eines ersten Organs (ORG1) eines Schmierkreislaufs (1, 10, 20, 30) eines Motors, wobei das eingespritzte Öl (10) in das erste Organ (ORG1) übergeht und mit einem ersten Luftvolumen (A) vermischt ist, wobei die Mischung ein erstes Medium (11) bildet, wobei das genannte Messsystem umfasst:
• einen Öleinspritzer (INJ) am Eingang des Schmierkreislaufs zum Versorgen des genannten Kreislaufs und;
• einen ersten Durchflussmesser (DB1) zum Messen eines Öldurchsatzes (D1) am Eingang des Schmierkreislaufs und;
• einen zweiten Durchflussmesser (DB2), der am Ausgang des ersten Organs (ORG1) angeordnet ist, wobei der genannte zweite Durchflussmesser (DB2) angeordnet ist, um einen Durchsatz (D2) des ersten Mediums (11) am Ausgang des ersten Organs (ORG1) zu einem bestimmten Zeitpunkt (ORG1) zu messen;
• eine optische Messvorrichtung (E1, C1, 16) gemäß Anspruch 1 zum Berechnen eines ersten Wertes (V1) zu einem bestimmten Zeitpunkt, der eine Ölmenge in einem Volumen des bestimmten ersten Mediums (11) darstellt, das in das genannte erste Organ (ORG1) übergeht;
• einen Rechner (K), der angeordnet ist zum Herleiten:
o eines Öldurchsatzes (D3) am Ausgang des ersten Organs (ORG1) ausgehend von dem Durchsatz (D2) des ersten gemessenen Mediums (11) und des ersten berechneten Wertes (V1);
o das momentane Öl-Rückhaltevolumen (V_{R}) in dem ersten Organ (ORG1) ausgehend von dem Vergleich des Öldurchsatzes (D1) am Eingang des Schmierkreislaufs und des berechneten Öldurchsatzes (D3) am Ausgang des ersten Organs (ORG1).

4. Messsystem eines Öl-Rückhaltevolumens gemäß Anspruch 3, **dadurch gekennzeichnet, dass** das erste Medium eine Mischung aus Luft (A) und Öl (10) ist.

5. Messsystem eines Öl-Rückhaltevolumens gemäß irgendeinem der Ansprüche 3 bis 4, **dadurch gekennzeichnet, dass** der zweite Durchflussmesser (DB2) eine Rückölpumpe ist, die zum Vermeiden der Verstopfung eines Organs des Schmierkreislaufs ausgelegt ist und ein Verhältnis Luftdurchsatz / Öldurchsatz in einer Größenordnung von 1,55 umfasst.

6. Messsystem eines Öl-Rückhaltevolumens gemäß irgendeinem der Ansprüche 3 bis 5, **dadurch gekennzeichnet, dass** die Messvorrichtung eine optische Vorrichtung (E1, C1, 15, 25) ist, umfassend einen Sender (E1) von Lichtbündeln (15), die das erste Medium (11) durchqueren und in das Organ übergehen, und einen lichtempfindlichen Sensor (C1) zum Messen der empfangenen Lichtmenge (15).

7. Messsystem eines Öl-Rückhaltevolumens gemäß Anspruch 6, **dadurch gekennzeichnet, dass** es eine Kanalisation umfasst, umfassend wenigstens einen lichtdurchlässigen Abschnitt (25) zum Transportieren des ersten Mediums (11) durch die optische Vorrichtung (E1, C1, 15, 25).

8. Messsystem eines Öl-Rückhaltevolumens gemäß Anspruch 7, **dadurch gekennzeichnet, dass** der Abschnitt der lichtdurchlässigen Kanalisation (25) einen Querschnitt in länglicher Form aufweist.

9. Messsystem eines Öl-Rückhaltevolumens gemäß irgendeinem der Ansprüche 6 bis 8, **dadurch gekennzeichnet, dass** er einen Speicher (M) zum Speichern der Kalibrierungswerte für unterschiedliche Ausgangsdurchsätze (D2) des ersten Organs (ORG1) der Kalibrierungswerte umfasst, die das Zuordnen der Bezugswerte einer Antwort des lichtempfindlichen Senders (C1) zu einer Gruppe von Mischungen aus dem ersten Bezugsmedium (11) zulassen, wobei jede Mischung unterschiedliche Luftverhältnisse (A) umfasst.

10. Messsystem eines Öl-Rückhaltevolumens gemäß irgendeinem der Ansprüche 6 bis 9, **dadurch gekennzeichnet, dass** der Schmierkreislauf eine Vielzahl von Organen (ORGi) umfasst, die von einer Vielzahl von Medien (10, 20, 30) durchquert sind, die zu einem bestimmten Zeitpunkt unterschiedliche ÖI- und Luftverhältnisse aufweisen, wobei das genannte System für jedes Organ, das von einem von dem Einspritzer (INJ) stammenden Medium durchquert ist, einen ersten Durchflussmesser (DB1), einen zweiten Durchflussmesser (DB2) und eine optische Vorrichtung (E1, C1, 15, 25), die in Anspruch 6 definiert ist, derart umfasst, dass die Rückhaltevolumen jedes Organs (ORGi) gemäß einem Messsystem gemäß irgendeinem der Ansprüche 2 bis 9 berechnet sind und dass das Öl-Rückhaltevolumen des Schmierkreislaufs durch Summieren jedes der genannten Rückhaltevolumen jedes Organs berechnet ist.

11. Messverfahren eines Öl-Rückhaltevolumens (V_{R}) in einem Organ (ORG1) eines Schmierkreislaufs eines Motors, wobei das genannte Organ (ORG1) durch ein Medium durchquert wird, umfassend eine Mischung aus eingespritztem Öl (10) und Luft (A), wobei das genannte Verfahren umfasst:
• ein Einspritzen eines Ölvolumens (10) am Eingang des genannten Organs (ORG1) mittels eines Einspritzers (INJ);
• ein Messen des eingehenden Durchsatzes des Ölvolumens (10) in das genannte Organ (ORG1) mittels eines ersten Durchflussmessers (DB1);
• das Erzeugen eines Lichtbündels mittels eines Senders (E1) durch einen lichtdurchlässigen Abschnitt einer Kanalisation, die am Ausgang des Organs (ORG1) angeordnet ist und das Medium transportiert;
• das Empfangen des von dem Sender (E1) erzeugten Signals auf einem Sensor (C1), wobei das genannte Signal die Kanalisation durchquert hat, die das Medium (11) transportiert;
• das Vergleichen des empfangenen Signals mit einer Tabelle von Kalibrierungswerten unter Berücksichtigung von unterschiedlichen Ölverhältnissen in einem Bezugsmedium mittels eines Rechners (K), wobei das genannte Medium (11) eine Mischung aus Luft und Öl umfasst, wobei die Werte in einem Speicher (M) gespeichert sind;
• ein Messen des Durchsatzes des Mediums (11) am Ausgang des Organs (ORG1) mittels eines zweiten Durchsatzmessers (DB2);
• ein Berechnen der Ölmenge in einem bestimmten Volumen des aus dem Organ (ORG1) austretenden Mediums ausgehend von dem Vergleich des empfangenen Signals mit der Tabelle von Kalibrierungswerten,
ein Berechnen des Rückhaltevolumens (V_{R}) in dem Organ (ORG1) des ÖIdurchsatzes und der berechneten Ölmenge in einem bestimmten Volumen, ausgehend von dem Durchsatz des gemessenen Mediums (11).

12. Messverfahren eines Öl-Rückhaltevolumens in einem Schmierkreislauf eines Motors, wobei der genannte Kreislauf eine Vielzahl von Organen (OR-Gi) umfasst, die jeweils von einem von einem Einspritzer (INJ) eingespritzten Medium durchquert werden, wobei das genannte Medium eine Mischung aus Öl und Luft umfasst, wobei das Rückhaltevolumen in jedem Organ (ORGi) gemäß dem Verfahren gemäß Anspruch 11 berechnet wird, **dadurch gekennzeichnet, dass** das genannte Verfahren eine Berechnung des Öl-Rückhaltevolumens in dem Schmierkreislauf durch die Summe der Öl-Rückhaltevolumen in jedem der genannten Organe umfasst.

## Claims

1. Optical measuring device (E1, C1, 16) comprising:
• a conduit comprising at least one translucent portion (25) for conveying a first fluid (11) through the optical device (E1, C1, 15, 25),
• an emitter (E1) of a light beam (15) configured to emit light beams traversing the first fluid (11) passing through the translucent portion (25) and a photosensor (C1) configured to receive the light beams through the translucent portion and to measure the quantity of received light (15),
• a memory (M) for storing, for different outflow rates (D2) of a first member (ORG1), calibration values, enabling reference values of a response of the photosensor (C1) to be associated with a set of reference mixtures of the first fluid (11), each mixture comprising different air proportions (A).
• a calculator for calculating a first value (V1) at a given instant representing a quantity of oil in a volume of a first fluid (11), from calibration values, said first fluid (11) being a mixture of a volume of oil (10) and a first volume of air (A), said measuring device (E1, C1, 16) being suited to correct, from the first value (V1), the measurement of a flow rate of a flowmeter (DB2) measuring a volume of oil outflowing from a member of a lubricating system (1, 10, 20, 30) of an engine.

2. Flowmeter (DB2) intended to be provided at the outlet of a first member (ORG1) of a lubricating system (1, 10, 20, 30) of an engine, said flowmeter (DB2) enabling a flow rate (D2) of a first fluid (11) passing through the first member (ORG1) to be measured, said first fluid (11) being a mixture of a volume of oil (10) and of a first air volume (A), **characterized in that** the flowmeter (DB2) comprises an optical measuring device (E1, C1, 16) according to claim 1, the calculator (K) of the optical measuring device enabling an oil flow rate (D3) at the outlet of the first member (ORG1) to be deduced from the measured flow rate (D2) of the first fluid (11) and from the first value (V1) calculated by the measuring device (E1, C1, 16).

3. System for measuring an oil retention volume (V_{R}) of at least one first member (ORG1) of a lubricating system (1, 10, 20, 30) of an engine, the injected oil (10) flowing inside the first member (ORG1) mixed with a first air volume (A), the mixture forming a first fluid (11), said measuring system comprising:
• an oil injector (INJ) at the inlet of the lubricating system to feed said system and;
• a first flowmeter (DB1) for measuring a first oil flow rate (D1) at the inlet of the lubricating system and;
• a second flowmeter (DB2) provided at the outlet of the first member (ORG1), said second flowmeter (DB2) being arranged to measure a flow rate (D2) of the first fluid (11) at the outlet of the first member (ORG1) at a given instant;
• an optical measuring device (E1, C1, 16) according to claim 1 for calculating a first value (V1) at a given instant representing a quantity of oil in a given volume of the first fluid (11) flowing inside said first member (ORG1);
• a calculator (K) arranged to deduce:
o an oil flow rate (D3) at the outlet of the first member (ORG1) from the measured flow rate (D2) of the first fluid (11) and the calculated first value (V1);
o the instantaneous oil retention volume (V_{R}) in the first member (ORG1) from the comparison of the oil flow rate (D1) at the inlet of the lubricating system and the calculated flow rate (D3) at the outlet of the first member (ORG1).

4. System for measuring an oil retention volume according to claim 3, **characterized in that** the first fluid is a mixture of air (A) and oil (10).

5. System for measuring an oil retention volume according to any of claims 3 to 4, **characterized in that** the second flowmeter (DB2) is a scavenge pump dimensioned to avoid overload of a member of the lubricating system and comprising an air flow rate/oil flow rate ratio of the order of 1,5.

6. System for measuring an oil retention volume according to any of claims 3 to 5, **characterized in that** the measuring device is an optical device (E1, C1, 15, 25) comprising an emitter (E1) of a light beam (15) traversing the first fluid (11) passing through the member and a photosensor (C1) for measuring the quantity of received light (15).

7. System for measuring an oil retention volume according to claim 6, **characterized in that** it comprises a conduit including at least one translucent portion (25) for conveying the first fluid (11) through the optical device (E1, C1, 15, 25).

8. System for measuring an oil retention volume according to claim 7, **characterized in that** the translucent portion (25) of the conduit comprises an oblong-shaped section.

9. System for measuring an oil retention volume according to any of claims 6 to 8, **characterized in that** it comprises a memory (M) for storing, for different outflow rates (D2) of the first member (ORG1), calibration values, enabling reference values of a response of the photosensor (C1) to be associated with a set of reference mixtures of the first fluid (11), each mixture comprising different air proportions (A) .

10. System for measuring an oil retention volume according to any of claims 6 to 9, **characterized in that** the lubricating system comprises a plurality of members (ORGi) being traversed by a plurality of fluids (10, 20, 30) having different oil and air proportions at a given instant, said system comprising, for each member traversed by a fluid from the injector (INJ), a first flowmeter (DB1), a second flowmeter (DB2) and an optical device (E1, C1, 15, 25) defined in claim 6, such that the retention volumes of each member (ORGi) are calculated according to a measuring system of any of claims 2 to 9 and **in that** the oil retention volume of the lubricating system is calculated by summing each of said retention volumes of each member.

11. Method for measuring a resident oil volume (V_{R}) in a member (ORG1) of a lubricating system of an engine, said member (ORG1) being traversed by a fluid comprising a mixture of injected oil (10) and air (A), said method comprising:
• injecting an oil volume (10) at the inlet of said member (ORG1) by means of an injector (INJ);
• measuring the inflow rate of the oil volume (10) in said member (ORG1) by means of a first flowmeter (DB1);
• generating a light beam by means of an emitter (E1) through a translucent portion of a conduit provided at the outlet of the member (ORG1) and conveying the fluid;
• receiving the signal generated by the emitter (E1) on a sensor (C1), said signal having traversed the conduit conveying the fluid (11);
• comparing the signal received with a table of calibration values taking into account different oil proportions in a reference fluid by means of a calculator (K), said fluid (11) comprising a mixture of air and oil, the values being stored in a memory (M);
• measuring the flow rate of the fluid (11) at the outlet of the member (ORG1) by means of a second flowmeter (DB2);
• calculating the quantity of oil in a given volume of fluid outflowing from the member (ORG1), from the comparison of the signal received with the table of calibration values;
• calculating the resident oil volume (V_{R}) in the member (ORG1), from the measured fluid flow rate (11), from the oil flow rate and from the quantity of oil in a given volume, calculated.

12. Method for measuring a resident oil volume in a lubricating system of an engine, said system comprising a plurality of members (ORGi) each being traversed by a fluid injected by an injector (INJ), said fluid comprising a mixture of oil and air, the resident volume in each member (ORGi) being calculated according to the method of claim 11, **characterized in that** said method comprises calculating a resident oil volume in the lubricating system by summing the resident oil volumes in each of said members.
